# EUROPEAN PATENT SPECIFICATION

(11) **EP 2 048 003 B1**
(45) Date of publication and mention of the grant of the patent: **25.01.2012**
(21) Application number: 07019844.5
(22) Date of filing: 10.10.2007
(51) Int. Cl.: B60B 11/10

(54) **A supplementary and/or backup wheel system for an automobile and method of lifting an automobile in the area of a wheel**
Zusatz- und/oder Ersatzradsystem für ein Kraftfahrzeug und Verfahren zur Anhebung eines Kraftfahrzeugs im Radbereich
Système de roue complémentaire et/ou de rechange pour automobile et procédé de levage d'une automobile dans la zone d'une roue

(43) Date of publication of application: 15.04.2009
(73) Proprietor: King Saud University, 11421 Riyadh (SA)
(72) Inventor: Al-Rasheed, Khaled, 11543 Riyadh (SA)
(74) Representative: Schmid, Nils T.F.

(56) References cited:
- DE-A1- 1 480 751
- US-A- 2 502 060
- US-A- 3 679 267
- US-A- 3 770 323
- US-A- 4 350 394

## Description

The invention refers to a supplementary and/or backup wheel system for an automobile. The system comprises a means for lifting an automobile in the area of a wheel hub thereof from ground. Further, the system is constituted by an operation member for operatively contacting ground, as a spare wheel, an agricultural tool, like a plow, a traction aid, like spikes, or the like.

A supplementary wheel system is known from US 4,708,400, in which a spare tire can be installed to a vehicle without the use of a conventional jack. Further, the system does not require removal of the flat tire which remains attached with the wheel hub. The known supplementary wheel system comprises a threaded rod pivotably and nonrotatively connected with the wheel hub, a spare tire having a conical surface projecting towards said vehicle wheel with a central aperture, and a nut threaded on said rod adjacent to said tire of said vehicle wheel. For lifting the automobile in the area of the vehicle wheel, a spherical insert surrounding said rod causes the vehicle to lift when the nut is turned by a tool towards the vehicle wheel.

A disadvantage of the known supplementary wheel system consists in that the total work for lifting the automobile in a wheel area has to be provided manually by a person. This can be encumber for many people who might not be able to provide sufficient high operation force for turning the nut and therefore lifting the automobile.

US 3,770,323 refers to a vehicle jack comprising a lifting means realized by a rim portion. Said rim portion defines a cam member having a minimal rotation axis distance continuously increasing to a maximal rotation axis distance. US 4,350,394 discloses an emergency wheel constitute by a first and a second semi-secular rim portion. From US 3,679,267 a spare wheel is known comprising a first rigid wheel segment having a caming surface that lifts an automobile when rolling on ground.

In US 2,502,060, an emergency wheel for vehicle comprising complemental halfs is known serving either as a lifting means or an operation member.

It is an objective of the present invention to overcome the disadvantages of the prior art, particularly to provide a supplementary and/or backup wheel system by which the ergonomic handling of the system is facilitated. This objective is solved by features of attached claim 1.

According to the invention, the means for lifting the automobile in the area of a wheel from ground is formed by a rim portion which is preferably not a full circumferencing rim. The rim portion defines a cam periphery which has a minimum rotation axis distance continuously increasing to a maximum rotation axis distance. Because of the cam periphery and its increasing rotation axis distance particularly in a predetermined turning direction, the automobile is lifted when the cam periphery of the rim portion rolls on ground. By means of the cam periphery and the power of the automobile no actual lifting forces have to be personally generated, rather the automobile lifts itself when driving and turning the rim portion so that the cam periphery rolls on ground from its minimum rotation axis distance up to its maximum rotation axis distance. The invention has the advantage that the person who wishes to mount the supplementary and/or backup wheel to the automobile must not generate any forces for lifting the automobile.

Preferably at least one part of the operation member is rigidly mountable to the wheel hub of the automobile such that the at least one part can be turned from a passive ground - noncontacting operation mode - when said cam periphery rolling on ground, to an active operation mode in which said at least one part of the operation member comes in contact with ground after the automobile is lifted. The one part of the operation member which can also be detached from the wheel hub, keeps the lifted automobile in a position so that the operation member can be completed by for example exchanging the lifting means through a further part of the operation member. The one part and the further part form a full wheel structure.

For example, it is possible to mount an agricultural tool, like a plow, when the automobile is lifted and the automobile in the lifted area stands on the one part of the operation member. The plow can be attached to the wheel hub opposite to the operation member either keeping the lifting means mounted to the wheel hub or by replacing the lifting means.

In order to mount a spare wheel to the wheel hub, a further part of the operation member is configured in that the at least one part and the further part of the operation member form a circular running thread periphery provided with a caoutchouc. In this embodiment, the lifting means can form a part of the rim portion of the spare wheel, it can even form a part of the running treat.

Preferred embodiments of the invention are noted in the subclaims.

In a preferred embodiment, the at least one part of the operation member comprises a working periphery following said cam periphery. By this, a smooth rolling from the cam periphery of the lifting means to the at least one part of the operation member is provided. Preferably, said working periphery is positioned adjacently to the cam periphery at the maximum rotation axis distance thereof.

In a preferred embodiment, a periphery transition between said at least one part of the operation member and said lifting means is substantially smooth, stepless, and/or continuous. However, it could be preferred that between the operation member and the lifting means regarding their periphery, there is an acknowledgeable step such that the person advancing the automobile for the rolling of movement of the cam periphery on ground can easily acknowledge the moment, when the automobile stands exclusively on the at least one part of the operation member.

In a preferred embodiment, said operation member is formed by at least one rim section defining an at least one circumferential periphery having a constant rotation axis distance. Said rim portion and at least one rim section of the operation member are structurally adapted to each other such that said cam periphery of said lifting means merges at its maximum rotation axis distance into the circumferential periphery of said operation member.

Preferably, said rim portion and rim section are separately mountable components.

In a preferred embodiment, said operation member comprises two separately mountable rim sections. Said rim portion of said lifting means or one of the two rim section which shall replace said rim portion, and the other of the rim sections constitute a full rim structure of the operation member particularly forming a substantially circular working periphery of 360°.

In a preferred embodiment, for rigidly connecting said lifting means and said operation member to the wheel hub, both the lifting means and the operation member comprise holes particularly positioned in accordance to locations of wheel nut fixings defined in the wheel hub. By this, no further fixing measures are necessary in order to attach the system according to the invention to the wheel hub.

Alternatively, the system can comprises an intermediate structure for fixing said lifting means and said operation member to the wheel hub. Said intermediate structure is preferably a plate and has a first group of fixing holes positioned in accordance to locations of wheel nut fixings of the wheel hub. Therefore, a further fixing means for attaching the intermediate structure to the wheel hub is not necessary.

Further, the intermediate structure has a second group of fixing holes according to holes formed in the lifting means and the operation member so that the last can be fixed to the intermediate structure via screws.

In a preferred embodiment, said working periphery of said at least one part of the operation member extends about less that 180°, less than 150°, less than 120° or less than 90°.

Preferably, said cam periphery is realized by a circular edge of a rim portion the centre of said circular edge being offset from the rotational axis of the wheel hub.

According to the invention, said lifting means comprises an element for fixing the rim portion of said lifting means to a rim section of said operation member both in a first mounting position in which the centre of a circular cam periphery is offset from the rotation axis, and a second mounting position in which said circular cam periphery is part of the full circumferential periphery of the operation member. Preferably, said rim portion is supported by the wheel hub such that it pivots from the first to the second mounting position.

Further, the invention refers to a method of lifting an automobile in the area of the wheel of an automobile. The method comprises the steps of rigidly connecting a rim portion defining a cam periphery having a minimum rotation distance axis continuously increasing to a maximum rotation axis, to a wheel hub of the automobile and advancing the automobile in forward or rearward direction depending on orientation of the rotation axis distance increase such that the rim portion of the lifting means rolls on its cam periphery to the maximum rotation axis distance, thereof.

In a further alternative aspect of the invention, several rim portions of the supplementary wheel could be hingedly connected to each other in order to compose a foldable supplementary wheel. In a first mounting step, the lifting means in the form of a rim portion having a cam periphery is used for lifting the wheel area of the automobile. In a second mounting step, the portions are refolded and fastened such that the supplementary wheel is formed.

Afterwards, the driver can continue his trip with the supplementary wheel.

It is clear that the inventive method shall be defined by the function of the supplementary and/or backup wheel system according to the invention.

Further features and advantages of the invention will be more evident when reading the following description of preferred embodiments of the invention by means of the attached drawings in which:
- Figure 1: is a diagrammatic section view of a vehicle wheel to which an intermediate structure of the supplementary and/or backup wheel system according to the invention is mounted;
- Figure 2: is a diagrammatic section view of the vehicle wheel according to figure 1, however, the complete supplementary wheel system according to the invention is attached to the vehicle wheel;
- Figures 3a to 3c: are diagrammatic side views showing the different steps for mounting a supplementary wheel system according to the invention.
- Figures 4a to 4e: are diagrammatic side views showing mounting steps for an alternative supplementary wheel system;
- Figures 5a and 5b: are diagrammatic side views showing further supplementary wheel system according to the invention as claimed; and
- Figures 6a and 6b: are diagrammatic side views showing a further embodiment of a supplementary wheel system according to the invention.

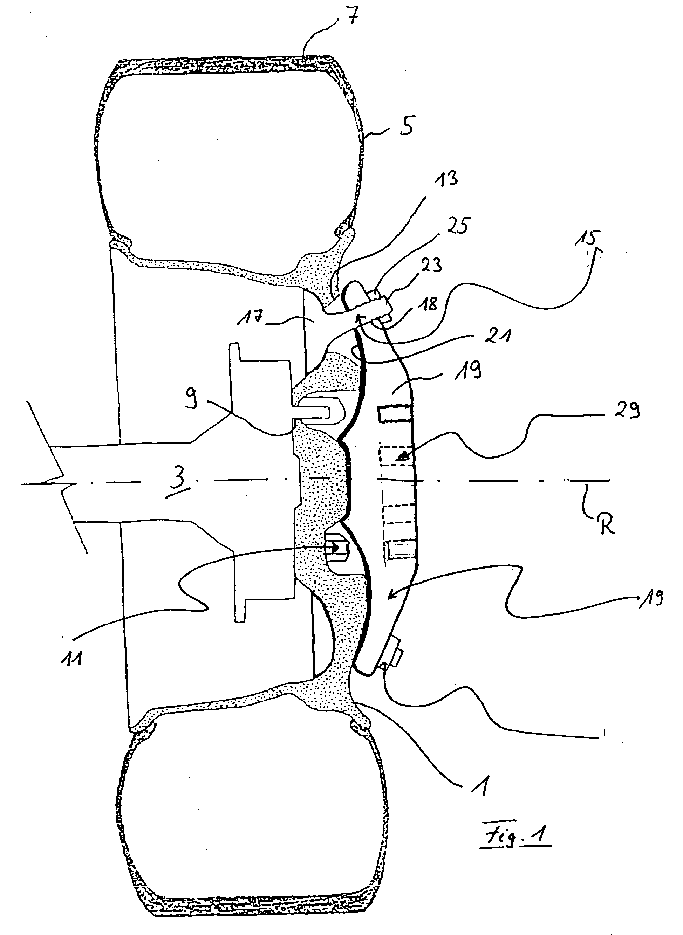

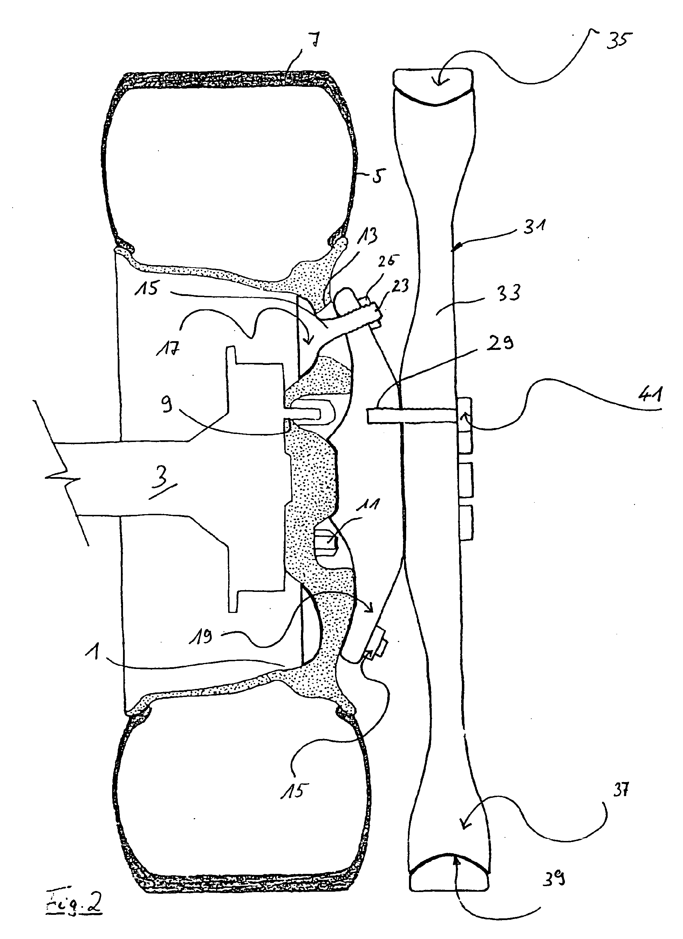

In figure 1 and 2 a vehicle wheel structure is shown generally constituted by a wheel rim 1 which is fixed to a wheel hub 3 defining a rotation axis R. The vehicle rim 1 is circumfer-enced by a tyre 5 having a running tread 7. The tyre 5 is pumped up by air.

For fixing the wheel rim 1 to the wheel hub 3 fixing holes 9 are provided in which fixing screws 11 are inserted.

Further, the wheel rim 1 comprises radially outward with respect to the fixing holes 9 mounting holes 13 through which mounting pins 15 are inserted. The mounting pins 15 have a wide basis 17 which cooperates with the inner surface of the wheel rim 1 adjacent to the mounting hole 13. The mounting pins 15 have a thread which is in engagement with a thread formed in a hole 18 of an intermediate rim plate 19 forming a part of the supplementary wheel system according to the invention.

The side 21 of the intermediate rim plate 19 facing to the wheel rim 1 is partly formed complementarily to the side profile of the wheel rim 1 such that a defined position of the rim plate 19 with respect to the wheel rim 1 concentrically to the rotation axis R is provided.

On the end 23 of the fixing pin 15 facing away from the wheel rim 1 a mounting nut 25 is screwed.

On the side of the intermediate rim plate 19 facing away from the wheel rim 1 a group of threaded holes 29 are formed in the intermediate rim plate 19 for attaching a spare wheel structure 31 forming the operation member, to the intermediate rim plate 19.

According to figure 2, the spare wheel structure 31 comprises a rim 33 and a running tread 35 of caoutchouc. The rim 33 is strengthened at the circular periphery 37 comprising a concave recess 39 in which the tread sits.

In figure 2 fixing screws 41 are inserted through the rim 33 in order to engage the blind holes 29 so as to fix the spare wheel structure 31 to the intermediate rim plate 19 and therefore to the wheel hub 3.

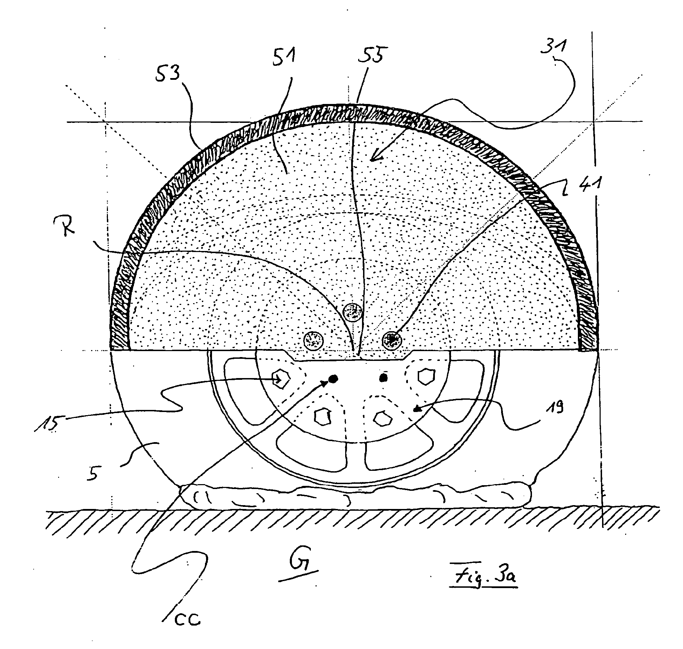

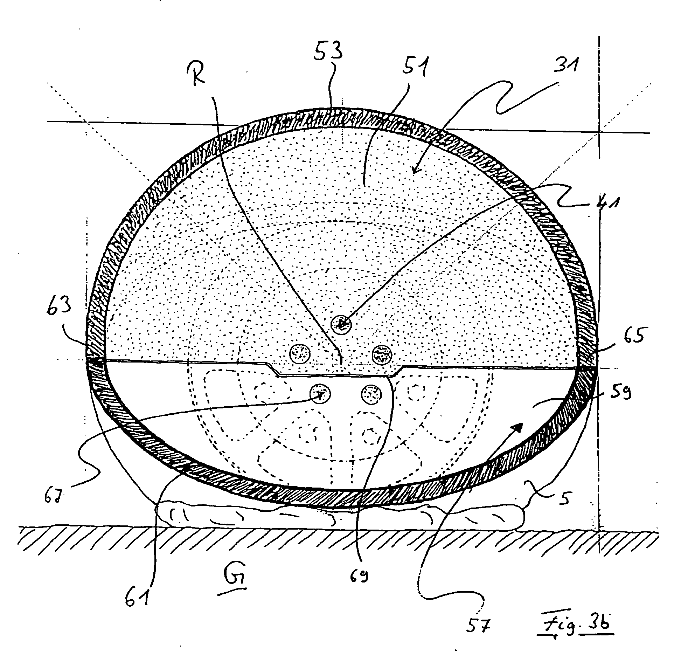

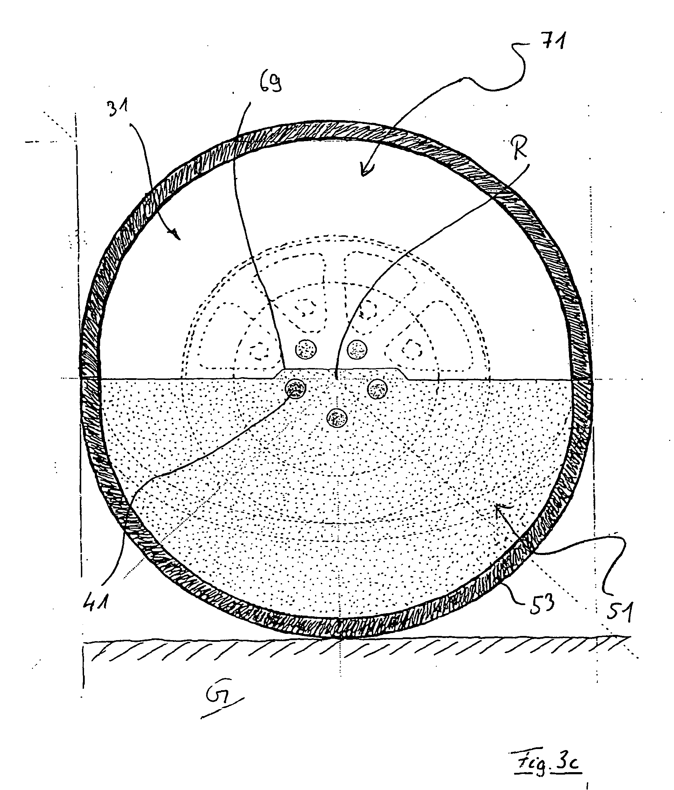

In figures 3a and 3c different mounting steps for attaching the spare wheel structure 31 to the wheel hub 3 are shown. According to the first mounting step (figure 3 a), a half plate rim section 51 defining a half circular working periphery 53 in form of a running tread of caoutchouc is fixed to the intermediate rim plate 19 via the fixing screws 41. In the center area of the rim section 51 the last is strengthened by a shoulder structure 55. Further, the shoulder structure 55 is provided in order to facilitate the mounting of a lifting means 57 which is shown in figure 3b. The lifting means 57 is realized by a rim portion 59 defining a cam periphery 61 having a running treat of caoutchouc. The cam periphery 61 extends elliptically from a radial level of the one periphery end 63 of the rim section 51 to the other periphery end 65 thereof. The rim portion 59 is fixed to the intermediate plate 19 by two fixing screws 67. The rim portion 59 of the lifting means 57 has a pocket 69 which is formed complementaryly to the shoulder structure 55 of the rim section 51 in order to define an exact position of the rim portion 59 of the lifting means 57 with respect to the rim section 51 of the spare wheel structure 31.

As visible in the figures 3a and 3b, the tyre 5 is flat so that the rotational axis R of the wheel hub 3 is lowered. However, in the mounting position according to figure 3b, the rotation axis distance of the lifting means 57 is still smaller than the distance of the rotation axis R to ground G.

After the lifting means 57 is mounted to the intermediate rim plate 19, as visible in figure 3b, the driver of the vehicle (not shown) can advance in forward or rearward direction in order to lift the automobile. The lifting is caused in that the cam periphery 61 rolls on ground G to its maximum rotation axis distance to the periphery end 63 or 65. As soon as the vehicle stands on the circular periphery 53 of the rim section 51, the driver stops the car and can remove the lifting means 57 from the intermediate rim plate 19. Now it is possible to complete the spare wheel structure 31 by mounting a further rim section 71 to the intermediate rim plate 19. The further rim section 71 comprises the same pocket 69 formed complementarily to the shoulder structure 55 of the rim section 51.

When the complete spare wheel structure 31 is mounted, the driver can continue driving the car although the flat tyre 5 is still mounted.

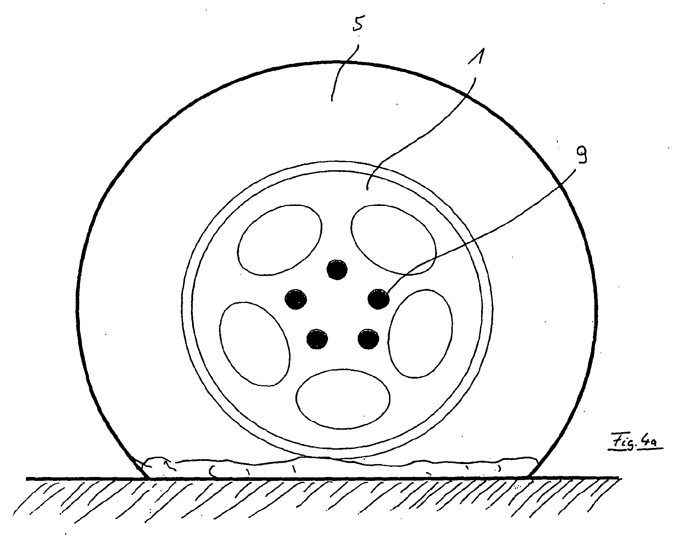

In figures 4a to 4e several mounting steps for an alternative embodiment of a supplementary wheel system are shown according to the invention.

Figure 4a shows a flat tyre 5 still in a mounting position on the automobile which is not shown. The flat tyre 5 circumferences the wheel rim 1 having five wheel fixing holes 9.

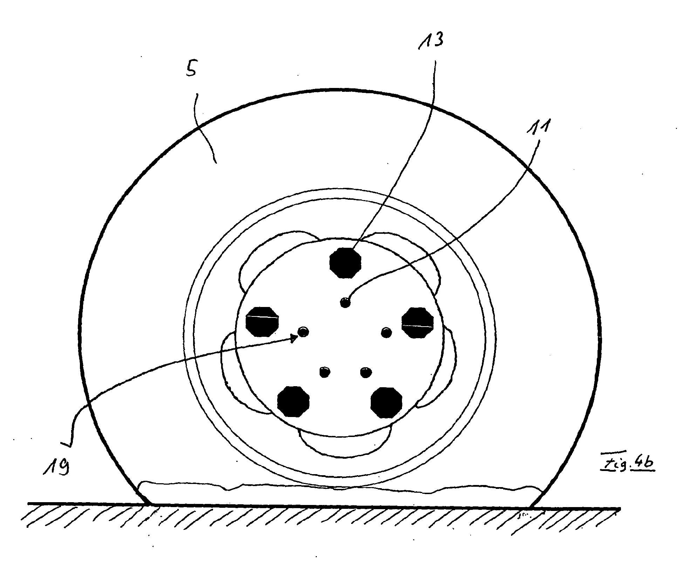

As can be seen in figure 4b, the intermediate rim plate 19 is fixed to the wheel rim 1 via five fixing screws 11 using the wheel nut fixing for the wheel rim 1.

The intermediate rim plate 19 comprises a second group of holes 13 for mounting the spare wheel structure 31.

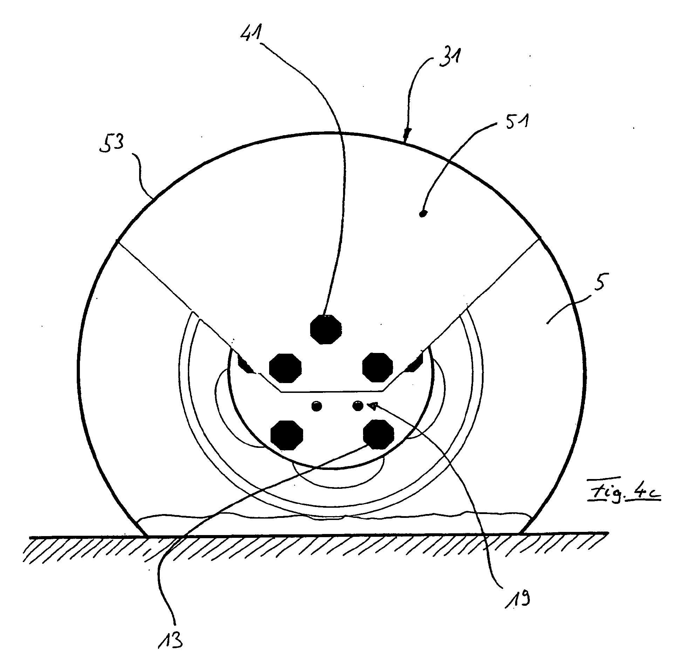

Figure 4c indicates the second step of mounting the supplementary wheel system in that a rim section 51 of the spare wheel structure 31 is fixed by three fixing screws 41 to the intermediate rim plate 19. The rim section 51 of the spare wheel structure 31 defines a circular working periphery 53 extending circularly within an angle of about 90°.

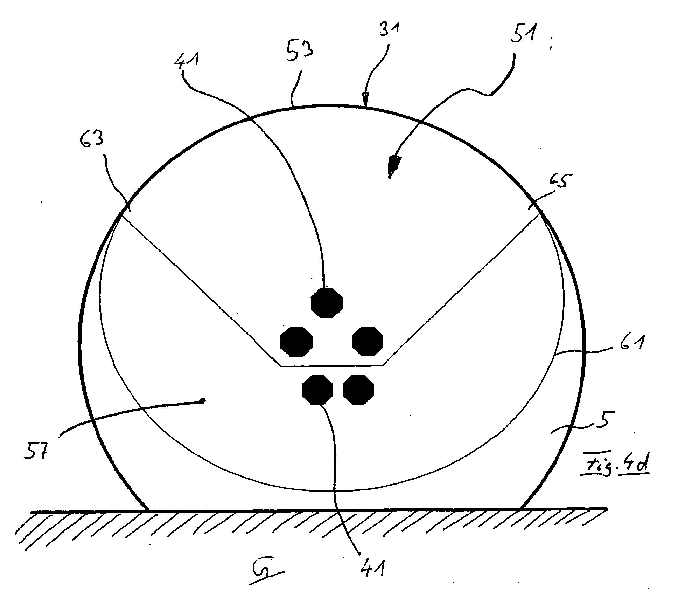

In the third mounting step according to figure 4d), a lifting means 57 in form of a rim portion 59 defining an elliptical cam periphery 61 is fixed to the intermediate rim plate 19 via two fixing screws 41. The elliptically cam periphery 61 comprises two maximum rotation axial distances merging stepless into the free ends 63 and 65, respectively, of the rim section 51 of the spare wheel structure 31. As visible in figure 4d, the minimal rotational axis distance of the cam periphery 31 is lower than the distance of the rotational axis R to the ground G so that, in the mounting position of the lifting means 57 according to figure 4d, the cam periphery 61 does not touch the ground surface.

When driving the not shown automobile in a rearward or forward direction, the cam periphery 61 of the lifting means 57 comes into contact with the ground G and lifts the automobile on rolling to its maximal rotation axis distance and rolls on the circular working periphery 53 of the rim section 51 of the spare wheel structure 31.

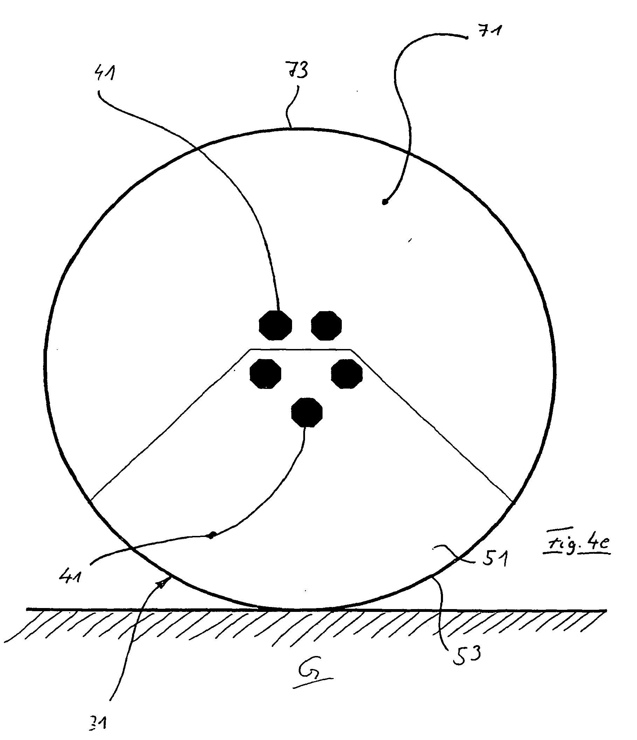

The car driver stops the car when the rim section 51 of the spare wheel structure 31 is in the position as shown in figure 4e. In this central position, it is easy to replace the lifting means 57 by a second rim section 71 which is fixed to the intermediate rim plate 19 via the same two fixing screws 41. The further rim section 71 defines a circular working periphery 73 which extends about 270° and provides a smooth transition to the rim section 51.

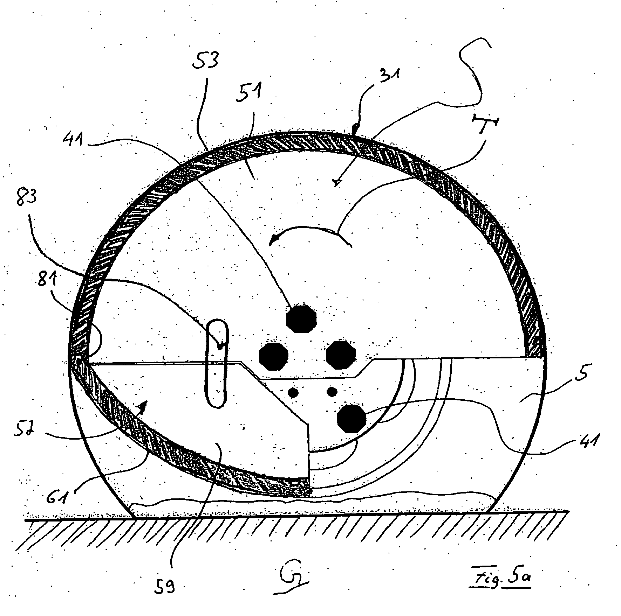

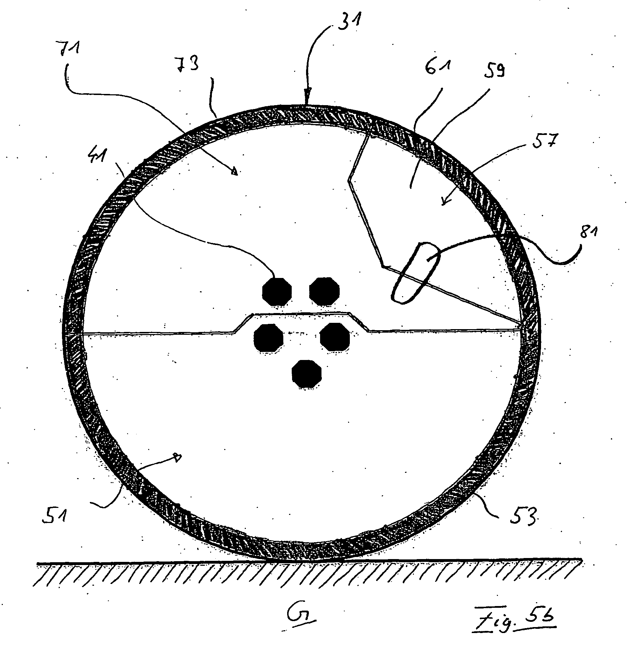

In figures 5a and 5b, an alternative supplementary wheel system is shown which distinguishes from the above-mentioned supplementary wheel system in that the rim portion 59 of the lifting means 57 is used in order to constitute the spare wheel structure, i.e. the cam periphery 61 is designed circularly and can be brought from a lifting position into a spare wheel position.

In figure 5a the rim portion 59 of the lifting means 57 is positioned in its lifting position such that an imaginary rotation axis of the circular cam periphery 61 is offset from the rotation axis R of the wheel hub 3. The rim portion 59 of the lifting means 57 is pivotably mounted to the rim section 51 in form of a half plate of the spare wheel structure 31 via a pivot pin 81. Further, the rim portion 59 of the lifting means 57 is fixed to the rim section 51 by means of a releasable latch 83 which provides a rigid connection between the rim section 51 of the spare wheel structure 31 and the rim portion 59 of the lifting means 57 and is positioned radially closer to the rotation axis R of the wheel hub 3 as the pivot pin 81.

In this mounting position, if the car driver drives the vehicle, the rim portion 59 of the lifting means 57 rolls on the cam periphery 61 and lifts the automobile until the last stands on the working periphery 53 of the rim section 51 of the spare wheel structure 31, which is shown in figure 5b.

In this mounting position, the latch 83 is manually released from the rim section 51 and pivoted in a position in which the working periphery 53 and the cam periphery 61 commonly describe a circle having a constant rotation axis distance. In order to complete the running tread for the spare wheel structure 31, a second rim section 71 is fixed to the wheel hub by the fixing screws 41 such that the working periphery 53 of the rim section 51, the working periphery 73 of the second rim section 51 and the cam periphery 61 of the rim portion 59 of the lifting means 57 describe a full continuous circle of 360°. In the spare wheel position of the rim portion 59 of the lifting means 57, the last is fixed to the second rim section 71 by the same latch 81.

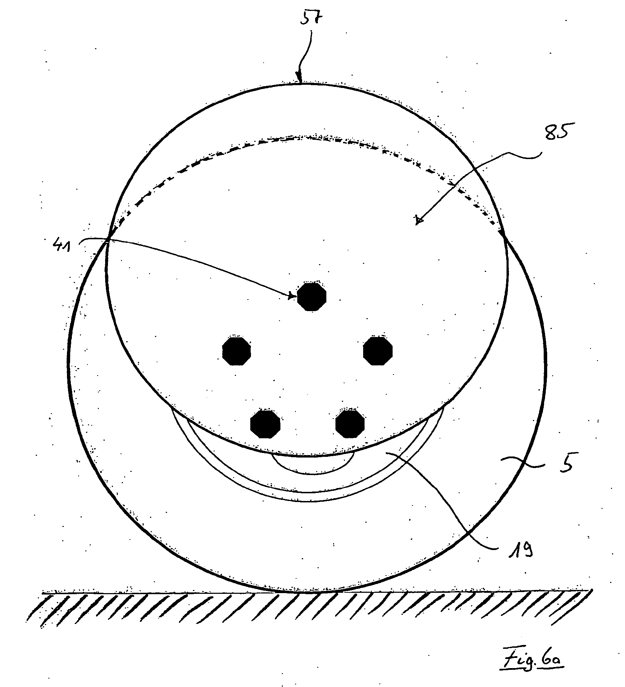

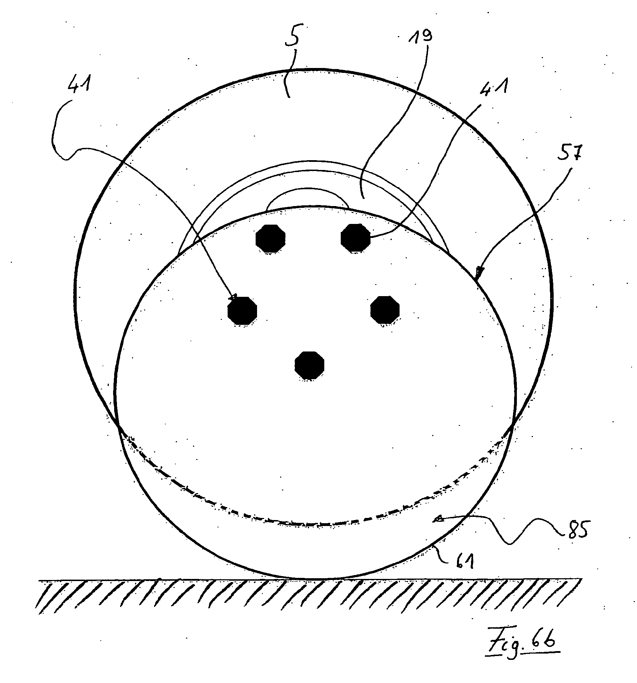

In figures 6a and 6b a further embodiment of a specified lifting means 57 is shown which is realized as a complete circular rim 85 fixed to the intermediate rim plate 19 by five fixing screws 41. When driving the car in forward or reward direction, the automobile is lifted by the rim 85 because of the offset of the centre of circular cam periphery of the rim 85 with respect to the rotation axis R of the wheel hub 3.

### List of references

- 1: wheel rim
- 3: wheel hub
- 5: tyre
- 7: tread
- 9: fixing hole
- 11: fixing screw
- 13: mounting hole
- 15: pin
- 18: hole
- 19: intermediate rim plate
- 21: side of 19
- 23: end of 15
- 25: mounting nut
- 29: blind hole
- 31: spare wheel structure
- 33: rim
- 35: tread
- 37: circular periphery
- 39: concave recess
- 41: fixing screws
- 51: rim section
- 53: working periphery
- 55: shoulder structure
- 57: lifting means
- 59: rim portion
- 61: cam periphery
- 63: periphery end
- 65: periphery end
- 67: fixing screws
- 69: pocket
- 71: rim section
- 73: working periphery
- 81: pivot pin
- 83: latch
- G: ground
- R: rotation axis

## Claims

1. A supplementary and/or backup wheel system for an automobile, comprising a means (57) for lifting the automobile in the area of a wheel hub from ground (G) and an operation member, such as a spare wheel (31), an agricultural tool, like a plow, a traction aid or the like, for operatively contacting ground wherein said lifting means (57) is rigidly mountable to the wheel hub (3) defining a rotation axis (R), wherein said lifting means (57) is formed by a rim portion (59) defining a cam periphery (61) which has a minimum rotation axis distance continuously increasing to a maximum rotation axis distance and lifts the automobile when rolling on ground (G), **characterized in that** said lifting means (57) comprises an element for fixing the rim portion (59) of said lifting means (57) to a rim section of the operation member in a first mounting position in which the center of a circular cam periphery is offset to the rotation axis (R), and a second mounting position in which said circular cam periphery (61) is part of the full circumferential periphery of the operation member.

2. The system according to claim 1 **characterized in that** at least one part of the operation member is rigidly mountable to the wheel hub (3) of the automobile such that the at least the one part can be turned from a passive ground - non contacting operation mode when said cam periphery (61) rolling on ground (G), to an active operation mode in which said at least one part of the operation member comes in operative contact with ground (G) after the automobile is lifted.

3. The system according to claim 2, **characterized in that** the at least one part of the operation member comprises a working periphery (53) following said cam periphery (61).

4. The system according to claim 3, **characterized in that** said working periphery (53) is positioned adjacently the cam periphery (61) at the maximum rotation axis distance thereof.

5. The system according to one of the claims 2 to 4 **characterized in that** a periphery transition between said at least one part of the operation member and said lifting means (57) is substantially smooth, steppless and/or continuous.

6. The system according to one of the claims 2 to 5, **characterized in that** said operation member is formed by at least one rim section (51) defining an at least partly circumferential periphery (53) having a constant rotation axis distance, wherein said rim portion (59) and said at least one rim section (51) of said operation member are structurally adapted to each other such that said cam periphery (61) of said lifting means merges at its maximum rotation axis distance into the circumferential periphery (53) of said operation member.

7. The system according to claim 6 **characterized in that** said rim portion (59) and rim section (51) are separately mountable components.

8. The system according to one of the claims 2 to 7 **characterized in that** said operation member comprises two rim sections (51, 57), wherein said rim portion (59) of said lifting means (57) or one of the two separately mountable rim sections (51, 71) replacing said rim portion, and the other of the two rim sections (71) constitute a full rim structure of the operation number particularly forming a substantially circular working periphery of 360°.

9. The system according to one of the claims 2 to 8 **characterized in that** for rigidly connecting said lifting means (57) and said operation member to the wheel hub (3) both the lifting means (57) and the operation member comprise holes particularly positioned in accordance to locations of wheel nut fixings of the wheel hub (3).

10. The system according to one of the claims 2 to 9 **characterized in that** it comprises an intermediate structure for fixing said lifting means (59) and said operation member to the wheel hub (3), wherein said intermediate structure is preferably a plate (19) and has a first group of fixing holes positioned in accordance to locations of wheel nut fixings of the wheel hub (3) and a second group of fixing holes according to holes formed in the lifting means (57) and the operation member.

11. The system according to claim 2 to 10 **characterized in that** said working periphery (53) of said at least one part of the operation member extends about less than 180°, less than 150°, less than 120° or less than 90°.

12. The system according to claim 2 to 11 **characterized in that** said cam periphery (61) is realized by a circular edge of a rim portion the center of which is offset to the rotational axis of the wheel hub (3).

13. The system according to one of the claim 1 to 12 **characterized in that** said rim portion (59) is supportable at the wheel hub such that it pivots from the first to the second mounting position.

14. The system according to one of the claims 1 to 13 **characterized in that** the operation member and/or the lifting means are formed by at least two rim sections which are hingedly connectable to the wheel hub such that the rim sections can be developed from an unfolded passive position to an unfolded active position.

15. Method of lifting an automobile in the area of a wheel of the automobile with the system according to one of the claims 1 to 14 wherein a rim portion defining a cam periphery having a minimum rotation axis distance continuously increasing to a maximum rotation axis distance is rigidly connected to a wheel hub of the automobile, and in advancing the automobile in a forward or reward direction the rim portion of the lifting means rolls at its cam periphery to the maximum rotation axis distance, thereof.

## Patentansprüche

1. Zusatzrad- und/oder Reserveradsystem für ein Automobil, umfassend eine Einrichtung (57), um das Automobil im Bereich einer Radnabe vom Boden (G) anzuheben, und ein Betriebsglied wie etwa ein Reserverad (31), ein landwirtschaftliches Gerät wie ein Pflug, eine Zughilfe oder Ähnliches, um betriebsgemäß Bodenkontakt herzustellen, wobei die Anhebeeinrichtung (57) starr an die Radnabe (3), die eine Rotationsachse (R) definiert, montierbar ist, wobei die Anhebeeinrichtung (57) aus einem Felgenbestandteil (59) gebildet ist, der eine Nockenaußenseite (61) definiert, welche einen kontinuierlich zu einem maximalen Abstand zur Rotationsachse zunehmenden, minimalen Abstand zur Rotationsachse aufweist, und das Automobil anhebt, wenn sie auf dem Boden (G) rollt, **dadurch gekennzeichnet, dass** die Anhebeeinrichtung (57) ein Element zum Befestigen des Felgenbestandteils (59) der Anhebeeinrichtung (57) an einem Felgenabschnitt des Betriebsgliedes in einer ersten Montageposition, in der der Mittelpunkt einer Kreisförmigen Nockenaußenseite gegenüber der Rotationsachse (R) verschoben ist, und einer zweiten Montageposition aufweist, in der die kreisförmige Nockenaußenseite (61) Teil der gesamten Umfangsaußenseite des Betriebsgliedes ist.

2. System nach Anspruch 1, **dadurch gekennzeichnet, dass** mindestens ein Teil des Betriebsgliedes starr derart an der Radnabe (3) des Automobils montierbar ist, dass er von einem passiven nicht-bodenberührenden Betriebszustand, wenn die Nockenaußenseite (61) auf dem Boden (G) rollt, zu einem aktiven Betriebszustand drehbar ist, in dem der mindestens eine Teil des Betriebsgliedes in betriebsgemäßen Bodenkontakt kommt, nachdem das Automobil angehoben ist.

3. System nach Anspruch 2, **dadurch gekennzeichnet, dass** mindestens ein Teil des Betriebsgliedes eine Arbeitsaußenseite (53) aufweist, die auf die Nockenaußenseite (61) folgt.

4. System nach Anspruch 3, **dadurch gekennzeichnet, dass** die Arbeitsaußenseite (53) benachbart der Nockenaußenseite (61) an deren maximalem Abstand zu Rotationsachse positioniert ist.

5. System nach einem der Ansprüche 2 bis 4, **dadurch gekennzeichnet, dass** ein Außenbereich-Übergangsbereich zwischen dem mindestens einem Teil des Betriebsgliedes und der Anhebeeinrichtung (57) im wesentlichen gleichmäßig, stufenlos und/oder kontinuierlich ist.

6. System nach einem der Ansprüche 2 bis 5, **dadurch gekennzeichnet, dass** das Betriebsglied durch mindestens einen Felgenabschnitt (51) gebildet ist, das eine zumindest teilweise Umfangsaußenseite (53) mit einer konstanten Drehachse definiert, wobei der Felgenbestandteil (59) und der mindestens eine Felgenabschnitt (51) des Betriebsgliedes strukturell derart aneinander angepasst sind dass die Nockenaußenseite (61) der Anhebeeinrichtung in die Umfangsaußenseite (53) des Betriebsgliedes an ihrem maximalen Abstand zur Rotationsachse übergeht.

7. System nach Anspruch 6, **dadurch gekennzeichnet, dass** der Felgenbestandteil (59) und der Felgenabschnitt (51) getrennt montierbare Bauteile sind.

8. System nach einem der Ansprüche 2 bis 7, **dadurch gekennzeichnet, dass** das Betriebsglied zwei Felgenabschnitte (51, 57) umfasst, wobei der Felgenbestandteil (59) der Anhebeeinrichtung (57) oder einer der beiden getrennt montierbaren Felgenabschnitte (51, 71), der diesen Felgenbestandteil ersetzt, und der andere der beiden Felgenabschnitte (71) eine vollständige Felgenstruktur des Betriebsgliedes, insbesondere einen im wesentlichen kreisförmigen Arbeitsaußenumfang von 360° bilden.

9. System nach einem der Ansprüche 2 bis 8, **dadurch gekennzeichnet, dass** sowohl die Anhebeeinrichtung (57) als auch das Betriebsglied Löcher umfassen, die entsprechend der Position von Radmutterbefestigungen der Radnabe (3) besonders positioniert sind, um die Anhebeeinrichtung (57) und das Betriebsglied starr mit der Radnabe (3) zu verbinden.

10. System nach einem der Ansprüche 2 bis 9, **dadurch gekennzeichnet, dass** es eine Zwischenstruktur umfasst, um die Anhebeeinrichtung (59) und das Betriebsglied mit der Radnabe (3) zu verbinden, wobei die Zwischenstruktur vorzugsweise eine Platte (19) ist und eine erste Gruppe von Befestigungslöchern, die entsprechend der Position von Radmutterbefestigungen der Radnabe (3) positioniert sind, und eine zweite Gruppe von Befestigungslöchern aufweist, die den in die Anhebeeinrichtung (57) und das Betriebsglied eingebrachten Löchern entsprechen.

11. System nach einem der Ansprüche 2 bis 10, **dadurch gekennzeichnet, dass** sich die Arbeitsaußenseite (53) des mindestens einen Teils des Betriebsgliedes über weniger als 180°, weniger als 150°, weniger als 120° oder weniger als 90° erstreckt.

12. System nach einem der Ansprüche 2 bis 11, **dadurch gekennzeichnet, dass** die Nockenaußenseite (61) durch einen kreisförmigen Rand eines Felgenbestandteils gebildet ist, dessen Mittelpunkt von der Rotationsachse der Radnabe (3) versetzt ist.

13. System nach einem der Ansprüche 1 bis 12, **dadurch gekennzeichnet, dass** der Felgenbestandteil (59) derart an der Radnabe aufhängbar ist, dass er von der ersten zur zweiten Montageposition schwenkt.

14. System nach einem der Ansprüche 2 bis 13, **dadurch gekennzeichnet, dass** das Betriebsglied und/oder die Anhebeeinrichtung durch mindestens zwei Felgenabschnitte gebildet sind, die derart an die Radnabe anlenkbar sind, dass die Felgenabschnitte aus einer entfalteten Passivposition zu einer entfalteten Aktivposition entwickelt werden können.

15. Verfahren zum Anheben eines Automobils im Bereich eines Rades des Automobils, wobei ein Felgenbestandteil eine Nockenaußenseite definiert, die einen minimalen Abstand zur Rotationsachse aufweist, der kontinuierlich zu einem maximalen Abstand zur Rotationsachse zunimmt, und starr mit einer Radnabe eines Automobils verbunden ist, und wobei bei Bewegen des Automobils in Vorwärts- oder Rückwärtsrichtung der Felgenabschnitt der Anhebeeinrichtung an dessen Nockenaußenseite zu dessen maximalen Abstand zur Rotationsachse rollt.

## Revendications

1. Système de roue supplémentaire et/ou de réserve pour une automobile, comprenant un moyen (57) pour soulever l'automobile du sol (G) au niveau d'un moyeu et un élément opérationnel, comme une roue de secours (31), un outil agricole, comme une charrue, un auxiliaire de traction ou similaire, pour contacter opérationnellement le sol, dans lequel ledit moyen de levage (57) peut être monté rigidement au moyeu (3) en définissant un axe de rotation (R), dans lequel ledit moyen de levage (57) est formé par une portion de jante (59) définissant une périphérie de cale (61) qui a une distance d'axe de rotation minimale augmentant continuellement jusqu'à une distance d'axe de rotation maximale et soulève l'automobile quand elle roule sur le sol (G), **caractérisé en ce que** ledit moyen de levage (27) comprend un élément pour fixer la portion de jante (59) dudit moyen de levage (57) à une section de jante de l'élément opérationnel dans une première position de montage dans laquelle le centre d'une périphérie de came circulaire est décalée par rapport à l'axe de rotation (R), et une seconde position de montage dans laquelle ladite périphérie de came circulaire (61) fait partie de la périphérie circonférentielle complète de l'élément opérationnel.

2. Système selon la revendication 1, **caractérisé en ce que** au moins une partie de l'élément opérationnel peut être montée rigidement sur le moyeu (3) de l'automobile de telle sorte que au moins une partie puisse être passée d'un mode opérationnel passif sans contact avec le sol, quand ladite périphérie de came (61) roule sur le sol (G), à un mode opérationnel actif dans lequel au moins une partie de l'élément opérationnel vient en contact opérationnel avec le sol (G) après que l'automobile a été soulevée.

3. Système selon la revendication 2, **caractérisé en ce que** au moins une partie de l'élément opérationnel comprend une périphérie de travail (53) suivant ladite périphérie de came (61).

4. Système selon la revendication 3, **caractérisé en ce que** ladite périphérie de travail (53) est positionnée de manière adjacente à la périphérie de came (61) à la distance d'axe de rotation maximale de celle-ci.

5. Système selon une des revendications 2 à 4, **caractérisé en ce que** une transition de périphérie entre ladite au moins une partie de l'élément opérationnel et ledit moyen de levage (57) est substantiellement lisse, sans paliers et/ou continue.

6. Système selon une des revendications 2 à 5, **caractérisé en ce que** ledit élément opérationnel est formé par au moins une section de jante (51) définissant une périphérie (53) au moins partiellement circonférentielle ayant une distance d'axe de rotation constante, dans lequel ladite portion de jante (59) et ladite au moins une section de jante (51) dudit élément opérationnel sont adaptées structurellement l'une à l'autre de telle sorte que ladite périphérie de came (61) dudit moyen de levage fusionne à sa distance d'axe de rotation maximale en la périphérie circonférentielle (53) dudit élément opérationnel.

7. Système selon la revendication 6, **caractérisé en ce que** ladite portion de jante (59) et ladite section de jante (51) sont des composants montables séparément.

8. Système selon une des revendications 2 à 7, **caractérisé en ce que** ladite élément opérationnel comprend deux sections de jante (51,57), dans lequel ladite portion de jante (59) dudit moyen de levage (57) ou une des deux sections de jante (51,57) montables séparément remplaçant ladite portion de jante, et l'autre des deux sections de jante (71) constituent une structure de jante complète de l'élément opérationnel formant particulièrement une périphérie de travail substantiellement circulaire de 360°.

9. Système selon une des revendications 2 à 8, **caractérisé en ce que** pour raccorder rigidement ledit moyen de levage (57) et ledit élément opérationnel au moyeu (3) à la fois le moyen de levage (57) et l'élément opérationnel comprennent des trous positionnés particulièrement conformément à des emplacements des fixations d'écrou de roue du moyeu (3).

10. Système selon une des revendications 2 à 9, **caractérisé en ce que** il comprend une structure intermédiaire pour fixer ledit moyen de levage (59) et ledit élément opérationnel au moyeu (3), dans lequel ladite structure intermédiaire est de préférence une plaque (19) et possède un premiers groupe de trous de fixation positionnés conformément aux emplacements des fixations d'écrou de roue du moyeu (3) et un second groupe de trous de fixation conformément aux trous formés dans le moyen de levage (57) et l'élément opérationnel.

11. Système selon les revendications 2 à 10, **caractérisé en ce que** ladite périphérie de travail (53) de ladite au moins une partie de l'élément opérationnel s'étend à environ moins de 180°, moins de 150°, moins de 120° ou moins de 90°.

12. Système selon les revendications 2 à 11, **caractérisé en ce que** ladite périphérie de came (61) est réalisée par un bord circulaire d'une portion de jante, dont le centre est décalé par rapport à l'axe de rotation du moyeu (3).

13. Système selon une des revendications 1 à 12, **caractérisé en ce que** ladite portion de jante (59) peut être soutenue au niveau du moyeu de telle sorte qu'elle pivote de la première à la seconde position de montage.

14. Système selon une des revendications 1 à 13, **caractérisé en ce que** l'élément opérationnel et/ou le moyen de levage sont formés par au moins deux sections de jante qui peuvent être raccordées par charnière au moyeu de telle sorte que les sections de jante puissent être développées d'une position passive dépliée à une position active dépliée.

15. Procédé de levage d'une automobile au niveau d'une roue de l'automobile avec le système selon une des revendications 1 à 14, dans lequel une portion de jante définissant une périphérie de came ayant une distance d'axe de rotation minimal augmentant continuellement jusqu'à une distance d'axe de rotation maximale est raccordée rigidement à un moyeu de l'automobile, et en avançant l'automobile dans une direction avant ou arrière la portion de jante du moyen de levage roule au niveau de sa périphérie de came à la distance d'axe de rotation maximale de cette dernière.
